# FASCICULE DE BREVET EUROPEEN

(11) **EP 2 376 271 B1**
(45) Date de publication et mention de la délivrance du brevet: **23.07.2014**
(21) Numéro de dépôt: 09793556.3
(22) Date de dépôt: 01.12.2009
(51) Int. Cl.: B29C 49/70, B29C 49/48

(54) **PROCEDE ET DISPOSITIF DE FORMAGE DE RECIPIENTS METTANT EN OEUVRE UN INSERT DE BOXAGE VENTILE**
VERFAHREN UND VORRICHTUNG ZUR HERSTELLUNG VON BEHÄLTERN UNTER VERWENDUNG EINES GELÜFTETEN BEHÄLTNISHERSTELLUNGSEINSATZES
METHOD AND DEVICE FOR FORMING CONTAINERS USING A VENTILATED BOXING INSERT

(30) Priorité: 03.12.2008 FR 0806797
(43) Date de publication de la demande: 19.10.2011
(73) Titulaire: Sidel Participations, 76930 Octeville sur Mer (FR)
(72) Inventeur: CHOMEL, Nicolas, F-76930 Octeville sur Mer (FR); AUVRAY, Sylvain, F-76930 Octeville sur Mer (FR); LANGLOIS, Jean-Christophe, F-76930 Octeville sur Mer (FR); BRIARD, Arnaud, F-76930 Octeville sur Mer (FR)
(74) Mandataire: Louiset, Raphael
(86) Numéro de dépôt international: PCT/FR2009/001365
(87) Numéro de publication internationale: WO 2010/063901

(56) Documents cités:
- WO-A-2007/016959
- WO-A-2007/020346
- JP-A- 59 001 226
- US-A- 4 123 217

## Description

L'invention a trait au formage des récipients à partir d'ébauches en matière thermoplastique, et plus précisément au formage des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Certains récipients peuvent être munis de réserves en creux formées en saillie vers l'intérieur du récipient et réalisées dans un but esthétique (par ex. création de galbes), structurel (par ex. réalisation de panneaux destinés à absorber la déformation du récipient lors d'un remplissage à chaud) ou fonctionnel (réalisation d'une poignée de préhension du récipient).

Pour former ce type de récipient, une technique connue consiste à employer un moule muni d'un insert mobile initialement escamoté dans la paroi du moule et déployé en présence du récipient en cours de formation dans le moule pour repousser la matière lorsque celle-ci atteint la paroi, comme cela est illustré dans les demande de brevet européen EP 1 922 256 (SIDEL) ou EP 346 518 (TOAGOSEI) ou US 4123217.

Cette technique ne va pas sans inconvénients. En premier lieu, la formation de la réserve en creux, qui nécessite le déploiement de l'insert, grève le temps de cycle unitaire de plusieurs 1/10^{e} de seconde, ce qui, rapporté à des cadences de plusieurs milliers de cycles par heure, entraîne une baisse de productivité importante par rapport aux récipients ordinaires (c'est-à-dire sans réserves).

En outre, la pénétration de l'insert entraîne un phénomène d'adhérence de la matière du récipient à la surface frontale de l'insert (en contact avec la réserve), ce qui rend délicat le démoulage, la rétractation de l'insert pouvant entraîner des déformations locales de la matière et, in fine, au moins un défaut d'aspect du récipient susceptible de l'envoyer au rebut.

Un objectif de l'invention est de remédier à ces problèmes en proposant une solution permettant de faciliter le démoulage d'un récipient muni d'une réserve en creux.

À cet effet, l'invention propose, en premier lieu, un procédé de formage, dans un moule muni d'une paroi formant une cavité, d'un récipient à partir d'une ébauche, qui comprend :
- Une opération de boxage consistant à repousser localement la matière de l'ébauche au moyen d'un insert monté mobile par rapport à la paroi du moule entre une position rétractée dans laquelle l'insert est escamoté dans la paroi, et une position sortie dans laquelle l'insert s'étend en saillie par rapport à la paroi, pour former sur le récipient une réserve en creux en saillie vers l'intérieur du récipient ;
- une opération de pressurisation locale consistant, après formation de la réserve en creux, à injecter un fluide sous pression entre l'insert et la réserve en creux.

En deuxième lieu, l'invention propose un dispositif pour le formage d'un récipient à partir d'une ébauche, qui comprend :
- Un moule muni d'une paroi définissant une cavité ;
- Un insert de boxage monté mobile par rapport à la paroi du moule entre une position rétractée dans laquelle l'insert est escamoté dans la paroi, et une position sortie dans laquelle l'insert s'étend en saillie par rapport à la paroi, vers l'intérieur de la cavité, pour former sur le récipient, par repoussage, une réserve en creux en saillie vers l'intérieur du récipient, ledit insert présentant une surface frontale apte à venir en contact avec la réserve en creux ;
- Un circuit d'injection d'un fluide sous pression formé au moins partiellement dans l'insert et débouchant sur la surface frontale.

De la sorte, on évite l'adhérence de la matière à l'insert, ce qui facilite le démoulage du récipient et permet de gagner quelques 1/10^{e} de secondes sur le temps de cycle, au bénéfice de la cadence de fabrication.

En outre, en injectant un fluide régulé thermiquement, on peut assurer un refroidissement local de la réserve en creux ainsi formée, ce qui contribue à la rigidification du récipient et, de fait, à réduire encore le temps de cycle.

D'autres objets et avantages de l'invention apparaîtront à la lumière de la description faite ci-après en référence aux dessins annexés dans lesquels :
- la figure 1 est une vue en perspective éclatée montrant une unité de formage de récipients équipée d'un dispositif conforme à l'invention ;
- la figure 2 est une vue transversale en coupe de l'unité de formage de la figure 1, montrée dans une configuration ouverte lors du chargement d'un récipient intermédiaire ;

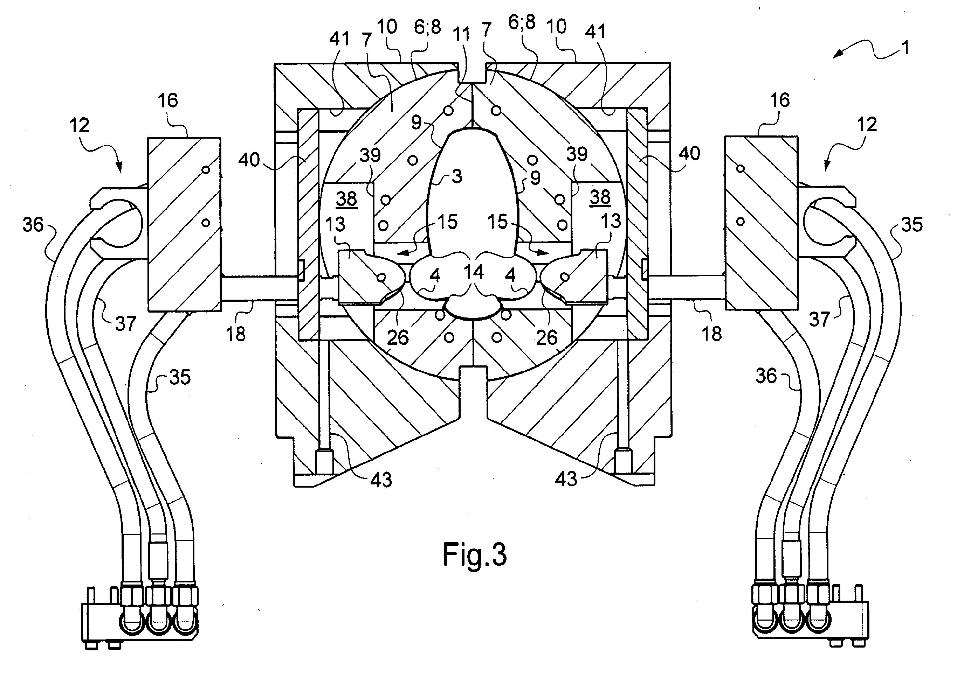

- la figure 3 est une vue similaire à la figure 2, montrant l'unité de formage dans une configuration fermée après chargement du récipient intermédiaire, et avant boxage de celui-ci ;
- la figure 4 est une vue similaire aux figures 2 et 3, montrant l'unité de formage dans une configuration de boxage du récipient ;
- la figure 5 est une vue partielle en coupe, faite dans un autre plan de coupe, montrant un détail de l'unité de formage de la figure 4 ;
- la figure 6 est une vue frontale en coupe, faite dans la platine, d'un module de boxage équipant l'unité de formage des figures précédentes ;
- la figure 7 est une vue transversale en coupe du module de boxage de la figure 6.

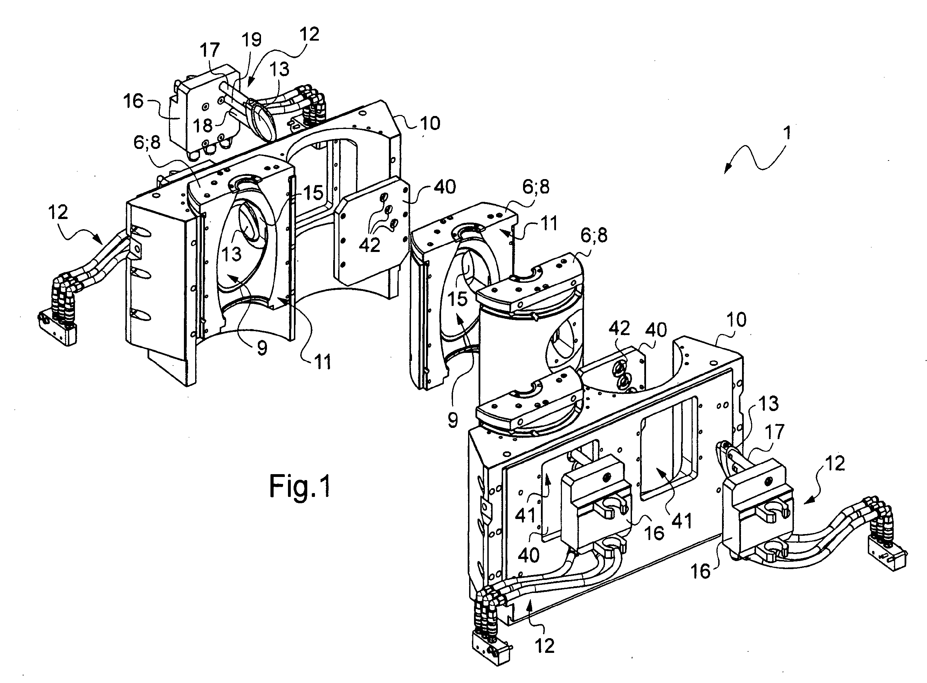

Sur la figure 1 est partiellement représentée une unité **1** de formage pour une machine de fabrication de récipients **2** à partir d'ébauches **3** en matière plastique, tel que PET (Polyéthylène téréphtalate). Le terme « ébauche » est employé pour désigner des préformes destinées à être soufflées, ou des récipients intermédiaires ayant subi une première série d'opérations dans un premier moule (par exemple un présoufflage) et destinés à subir une seconde série d'opérations dans un deuxième moule (par exemple un soufflage). Le terme « formage » est employé pour désigner tant une opération de présoufflage ou de soufflage conduite sur une préforme qu'une opération de finition conduite sur un récipient intermédiaire.

Dans le mode de réalisation illustré, correspondant à la description ci-après, les ébauches **3** sont des récipients intermédiaires, et l'unité **1** de formage est configurée pour réaliser une opération de boxage sur des récipients **3** intermédiaires ayant subi des opérations de présoufflage et de soufflage. A l'issue de ces opérations, chaque récipient intermédiaire présente sur son corps deux excroissances **4** symétriques dont le boxage provoque le retournement vers l'intérieur du récipient **2,** et la formation subséquente de deux réserves **5** en creux constituant ensemble une poignée de préhension du récipient **2.**

Comme cela est représenté sur la figure 1, l'unité **1** de formage est du type linéaire et comprend une pluralité de moules **6** munis chacun d'une paroi **7** définissant une cavité destinée à recevoir une ébauche.

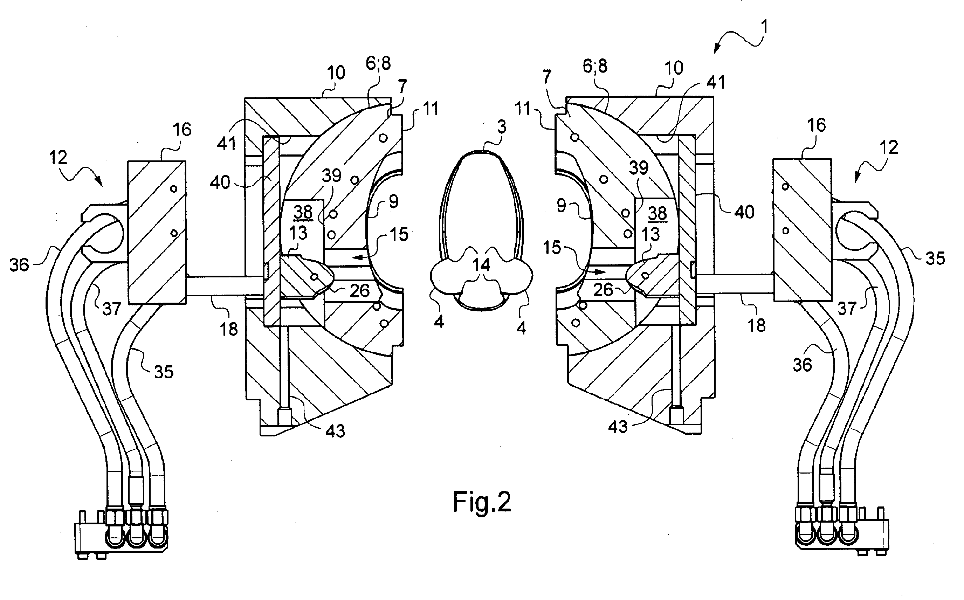

Plus précisément, chaque moule **6** comprend deux demi-moules **8,** munis chacun d'une demi-cavité **9.** Les demi-moules **8** sont montés en regard l'un de l'autre sur deux porte-moules **10** mobiles en translation horizontale par rapport à un bâti fixe (non représenté) de l'unité **1** de formage, suivant une direction transversale perpendiculaire à une direction longitudinale d'amenée des ébauches, entre :
- une position fermée dans laquelle les porte-moules **10** sont rapprochés, les demi-moules **8** étant en contact mutuel par un plan de joint **11** et les demi-cavités **9** formant conjointement la cavité du moule **6** ;
- une position ouverte (illustrée sur la figure 2) dans laquelle les porte-moules **10** sont écartés l'un de l'autre pour permettre l'évacuation des récipients **2** et le chargement des ébauches **3.**

Pour une description plus précise de la cinématique, et d'une forme possible de réalisation d'un système de commande d'ouverture et de fermeture des moules **6,** on pourra se reporter à la demande de brevet européen n°EP 1 924 421 au nom de la demanderesse.

L'unité **1** de formage comprend en outre au moins un dispositif **12** de boxage. Ce dispositif **12** comprend un insert **13** de boxage prévu pour repousser la paroi de l'ébauche **3** au niveau de chaque excroissance **4** à la manière d'un poinçon, de sorte à former, par retournement autour d'une zone d'articulation ou charnière **14,** une réserve **5** en creux en saillie vers l'intérieur du récipient **2.**

En l'occurrence, l'unité **1** de formage, configurée pour accueillir deux ébauches **3,** comprend deux dispositifs **12** de boxage montés en vis-à-vis, prévus pour effectuer un boxage simultané de l'ébauche **3** de part et d'autre du plan de joint **11** et réaliser deux réserves **5** en creux symétriques formant ensemble une poignée. Chaque dispositif **12** de boxage comprend par conséquent deux inserts **13** de boxage montés en parallèle et se déplaçant simultanément.

Chaque insert **13,** réalisé dans un matériau thermiquement conducteur (c'est-à-dire présentant un coefficient de conductibilité thermique élevé, tel qu'un alliage d'aluminium) est monté mobile en translation par rapport au demi-moule **8** correspondant, entre une position rétractée dans laquelle l'insert **13** est escamoté dans la paroi **7,** et une position sortie dans laquelle l'insert **13** s'étend en saillie par rapport à la paroi **7.**

Afin de permettre le passage et le mouvement de l'insert **13,** chaque demi-moule **8** est muni d'un évidement **15** pratiqué transversalement et dont le contour correspond à la surface balayée par l'insert **13,** avec un jeu suffisant pour permettre une circulation d'air autour de l'insert **13,** pour des raisons qui seront expliquées ci-après.

Le dispositif **12** de boxage est conçu pour permettre un montage et un démontage rapide des inserts **13,** de sorte à permettre l'interchangeabilité des inserts **13** soit pour procéder à une réparation, soit dans le cadre de l'adaptation de l'unité **1** au formage de récipients de forme ou de capacité différente.

Outre l'insert **13,** chaque dispositif **12** de boxage comprend une platine **16** de forme sensiblement parallélépipédique, sur laquelle l'insert **13** est fixé de manière rigide par l'intermédiaire de trois tiges superposées, à savoir une tige **17** supérieure, une tige **18** inférieure et une tige **19** centrale ancrées dans une face antérieure de la platine **16.**

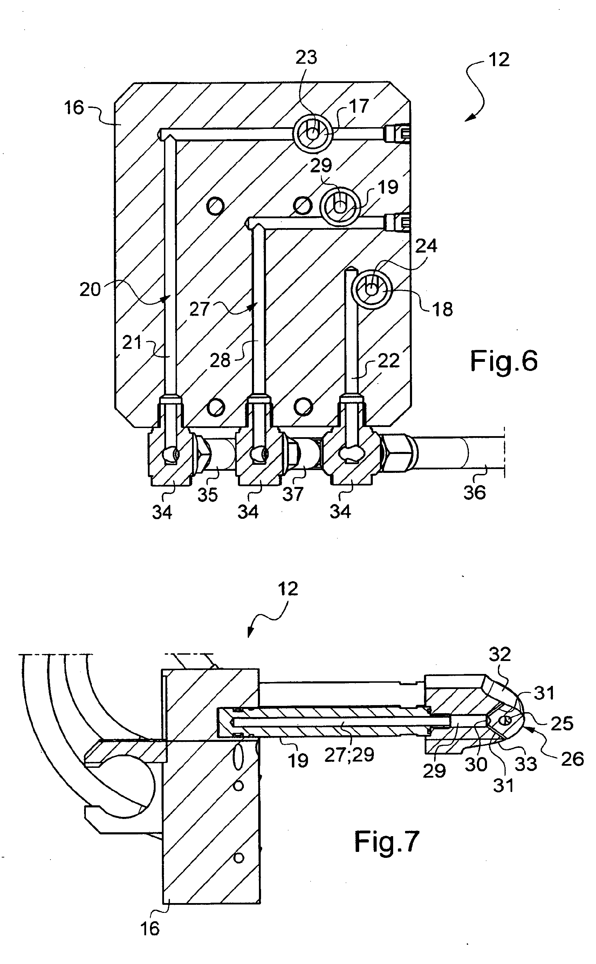

Comme cela est illustré sur la figure 7, le dispositif **12** de boxage est muni d'un circuit **20** de chauffe de l'insert **13,** qui comprend une canalisation **21** d'amenée de fluide caloporteur et une canalisation **22** d'évacuation du fluide, percées dans la platine **16** et raccordées à deux alésages **23, 24** pratiqués respectivement dans la tige **17** supérieure et dans la tige **18** inférieure et traversant l'insert **13.** Un conduit **25** ménagé dans l'insert **13** relie les alésages **23, 24** pour permettre la circulation du fluide et la chauffe de l'insert **13.**

Le fluide caloporteur est par exemple de l'eau portée à une température supérieure ou égale à la température de transition vitreuse de la matière constitutive du récipient **2** (soit environ 80°C pour le PET).

La chauffe de l'insert **13** permet à tout le moins de maintenir la température de l'ébauche **3,** au niveau de ses excroissances **4,** à une valeur élevée (aux environs de la température de transition vitreuse) où la matière est suffisamment malléable pour que le retournement des excroissances **4** soit aisé et que les contraintes exercées sur la matière n'entraîne pas de déformation intempestive du récipient **2.**

L'unité **1** de formage comprend en outre des moyens d'injection locale d'un fluide sous pression dans l'évidement **15,** au niveau d'une surface **26** frontale de l'insert **13.**

Ces moyens d'injection comprennent un circuit **27** d'injection équipant le dispositif **12** de boxage et comprenant une canalisation **28** d'amenée du fluide, percée dans la platine **16,** raccordée à un alésage **29** pratiqué dans la tige **19** centrale et aboutissant, à une extrémité **30** distale, dans l'insert **13.** Cette extrémité **30** est raccordée à deux canaux **31** secondaires en V qui débouchent sur la surface **26** frontale de l'insert **13.** plus précisément, l'insert **13** présentant une forme oblongue, la surface **25** frontale présente deux flancs **32, 33** opposés sur chacun desquels débouche un canal **31.**

Ce circuit **27** d'injection permet, à l'issue du boxage de l'excroissance **4,** de créer entre la surface **26** frontale de l'insert **13** et la réserve **5** un film de fluide sous pression, qui facilite le décollement de l'insert **13** du récipient **2,** préalablement à la rétractation de l'insert **13** et à l'éjection du récipient **2** à l'ouverture du moule **6.**

Le fluide est de préférence de l'air, à une pression relative d'au moins 1 bar, mais qui peut être portée à une valeur supérieure, par exemple comprise entre 10 et 30 bars. Une valeur de 15 bars est convenable pour l'application décrite ci-après.

Les canalisations **21, 22, 28** s'ouvrent sur une face inférieure de la platine **16.** Des raccords **34,** vissés dans les ouvertures des canalisations **21, 22, 28** relient celles-ci respectivement à des tubulures **35, 36** souples d'amenée et d'évacuation du fluide caloporteur, et à une tubulure d'amenée du gaz, raccordée à une source de gaz sous pression.

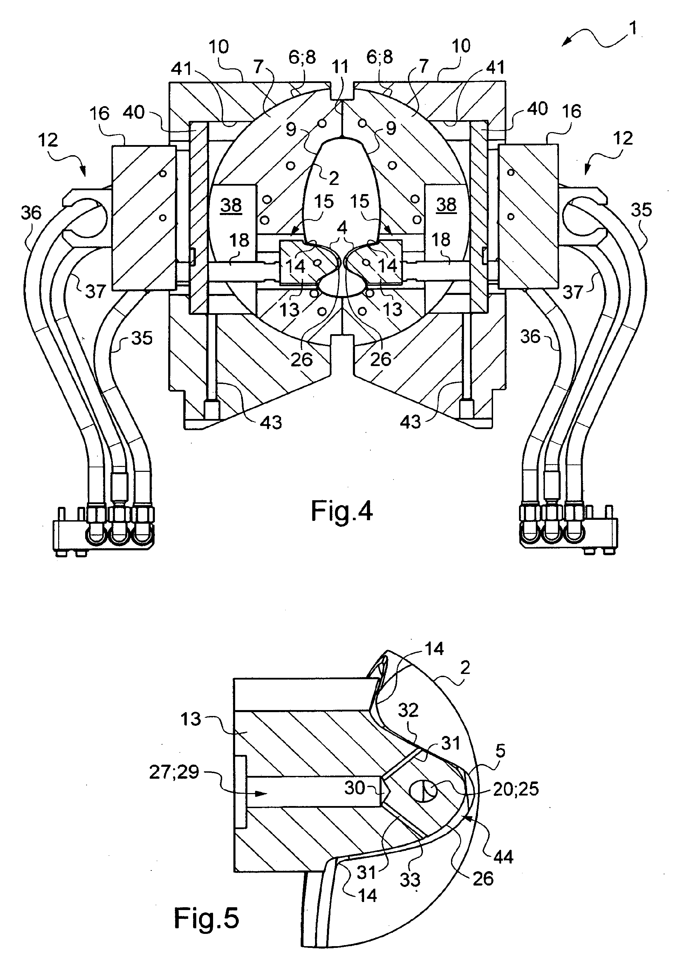

Selon un mode de réalisation préféré, illustré sur les figures 4 et 5, l'évacuation du gaz injecté au niveau de la surface **26** frontale de l'insert **13** s'effectue par le porte-moule **10,** dans lequel est ménagée, derrière le demi-moule **8,** une chambre **38** de compensation formée par un évidement creusé dans le porte-moule **10** au-delà de l'empreinte cylindrique correspondant à une face **39** arrière du demi-moule **8.**

Cette chambre **38** de compensation est fermée de manière étanche, à l'opposé du demi-moule **8,** par une plaque **40** qui obture une fenêtre **41** pratiquée dans le demi-moule **8** pour permettre l'accès manuel frontal au dispositif **12** de boxage.

Cette plaque **40** comprend trois perçages **42** superposés dans lesquels les tiges **17, 18, 19** sont montées coulissantes pour permettre le mouvement de translation du dispositif **12** de boxage. L'étanchéité du passage des tiges **17, 18, 19** au travers des perçages **42** peut être assurée au moyen de joints dynamiques à lèvres montés dans des lamages formés dans la plaque **40** autour de chaque perçage **42.**

La chambre **38** de compensation est délimitée, en regard de la plaque **40,** par la face **39** arrière du porte-moule **8.**

Le gaz sous pression présent dans l'évidement **15** et dans la chambre **38** de compensation (qui communique avec la partie de l'évidement **15** située en amont de l'insert **13 -** c'est-à-dire devant la surface **26** frontale - par le jeu ménagé autour de l'insert **13**) peut être évacué vers l'extérieur via une canalisation **43** percée transversalement dans le porte-moule **10** et débouchant dans la chambre **38,** comme cela est illustré sur la figure 4. Cette canalisation **43** est avantageusement raccordée à un silencieux (non représenté) disposé à l'extérieur du porte-moule **10** et permettant d'absorber au moins pour partie les bruits dus à la décompression de la chambre **38.**

On peut résumer le procédé de formage des récipients, par mise en oeuvre de l'unité **1** de formage qui vient d'être décrite, de la manière suivante.

Le récipient **3** intermédiaire est d'abord chargé dans le moule **6,** en position ouverte et avec les inserts en position rétractée (figure 2). Le moule **6** est ensuite fermé, les inserts **13** étant maintenus en position rétractée. La forme générale du récipient **3** intermédiaire correspond à la cavité du moule **6,** les excroissances **4** étant toutefois reçues dans les fenêtres **15** en regard des inserts **13,** à faible distance de ceux-ci.

On commande alors l'opération de boxage, par laquelle chaque excroissance **4** est repoussée transversalement par la translation de l'insert **13** correspondant vers sa position déployée, pour former, par retournement autour de la charnière **14,** une réserve **5** en creux en saillie vers l'intérieur du récipient **2.**

On commande alors l'injection locale d'air par le circuit **27,** pour pressuriser, via la canalisation **28,** via l'alésage **29** et via les canaux **31,** l'interface entre la surface **26** frontale de l'insert **13** et la réserve **5** et ainsi créer un interstice **44** entre eux pour en faciliter la séparation à l'issue du boxage.

À l'issue de cette opération de pressurisation locale, qui dure une fraction de seconde, on commande la dépressurisation (par mise à l'air libre ou par mise en communication avec un silencieux) de la chambre **38** de compensation (et donc de l'évidement **15**) via la canalisation **43.** L'évacuation de l'air est accompagné d'une détente endothermique qui contribue à refroidir - et donc à rigidifier - le récipient, et plus particulièrement les réserves **5.**

## Revendications

1. Procédé de formage, dans un moule (**6**) muni d'une paroi (**7**) formant une cavité, d'un récipient (**2**) à partir d'une ébauche (**3**), qui comprend :
- Une opération de boxage consistant à repousser localement la matière de l'ébauche (**3**) au moyen d'un insert (**13**) monté mobile par rapport à la paroi (**7**) du moule (**6**) entre une position rétractée dans laquelle l'insert (**13**) est escamoté dans la paroi (**7**), et une position sortie dans laquelle l'insert (**13**) s'étend en saillie par rapport à la paroi (**7**), pour former sur le récipient (**2**), par repoussage, une réserve (**5**) en creux en saillie vers l'intérieur du récipient (**2**) ;
**Caractérisé en ce qu'**il comprend :
- une opération de pressurisation locale consistant, après formation de la réserve (**5**) en creux, à injecter un fluide sous pression entre l'insert (**13**) et la réserve (**5**) en creux.

2. Procédé selon la revendication 1, qui comprend, à l'issue de l'opération de pressurisation locale, une opération de dépressurisation consistant à évacuer le fluide injecté lors de l'opération de pressurisation.

3. Procédé selon la revendication 1 ou 2, **caractérisé en ce que** le fluide employé lors de l'opération de pressurisation est de l'air sous pression.

4. Dispositif (**1**) pour le formage d'un récipient (**2**) à partir d'une ébauche (**3**), qui comprend :
- Un moule (**6**) muni d'une paroi (**7**) définissant une cavité (**9**) ;
- Un insert (**13**) de boxage monté mobile par rapport à la paroi (**7**) du moule (**6**) entre une position rétractée dans laquelle l'insert (**13**) est escamoté dans la paroi (**7**), et une position sortie dans laquelle l'insert (**13**) s'étend en saillie par rapport à la paroi (**7**), vers l'intérieur de la cavité (**9**), pour former sur le récipient (**2**), par repoussage, une réserve (**5**) en creux en saillie vers l'intérieur du récipient (**2**), ledit insert (**13**) présentant une surface (**26**) frontale apte à venir en contact avec la réserve (**5**) en creux ;
**Caractérisé en ce qu'**il comprend :
- Un circuit (**27**) d'injection d'un fluide sous pression formé au moins partiellement dans l'insert (**13**) et débouchant sur la surface (**26**) frontale.

5. Dispositif (**1**) selon la revendication 4, **caractérisé en ce que** le circuit (**27**) d'injection comprend un conduit (**28, 29**) d'amenée du fluide relié à au moins un canal (**30**) formé dans l'insert (**13**) et débouchant sur la surface (**26**) frontale.

6. Dispositif selon la revendication 5, **caractérisé en ce que** le circuit (**27**) d'injection comprend deux canaux (**30**) en V formés dans l'insert (**13**) et débouchant sur deux flancs (**32, 33**) opposés de la surface (**36**) frontale de l'insert (**13**).

7. Dispositif (**1**) selon l'une des revendications 4 à 6, **caractérisé en ce qu'**il comprend un porte-moule (**10**) auquel est fixé le moule (**6**), et **en ce qu'**un circuit (**41**) d'évacuation du fluide de l'évidement (**15**) est ménagé dans le porte-moule (**10**).

8. Dispositif (**1**) selon la revendication 7, **caractérisé en ce que** ledit circuit d'évacuation comprend une chambre (**38**) de compensation ménagée dans le porte-moule (**10**) et une canalisation (**43**) ménagée dans le porte-moule (**10**) et débouchant dans la chambre de compensation (**38**).

9. Dispositif (**1**) selon l'une des revendications 4 à 8, **caractérisé en ce qu'**il comprend en outre un circuit (**20**) de chauffe de l'insert (**13**), qui comprend un conduit (**21, 23**) d'amenée d'un fluide caloporteur jusqu'à l'insert (**13**), et un conduit (**22, 24**) d'évacuation du fluide caloporteur de l'insert (**13**).

10. Machine de fabrication de récipients, comprenant un dispositif selon l'une des revendications 4 à 9.

## Patentansprüche

1. Verfahren zum Formen, in einer mit einer einen Hohlraum formenden Wand (7) versehenen Form (6), eines Behälters (2) ausgehend von einem Rohling (3), das enthält:
- einen Einbuchtungsvorgang, der darin besteht, den Werkstoff des Rohlings (3) mittels eines Einsatzes (13) lokal zurückzuschieben, der bezüglich der Wand (7) der Form (6) zwischen einer zurückgezogenen Stellung, in der der Einsatz (13) in die Wand (7) eingezogen ist, und einer ausgetretenen Stellung beweglich montiert ist, in der der Einsatz (13) sich bezüglich der Wand (7) vorstehend erstreckt, um am Behälter (2) durch Zurückschieben eine zur Innenseite des Behälters (2) vorstehende Vertiefung (5) zu formen;
**dadurch gekennzeichnet, dass** es enthält:
- einen Vorgang der lokalen Druckbeaufschlagung, der nach dem Formen der Vertiefung (5) darin besteht, ein Druckfluid zwischen den Einsatz (13) und die Vertiefung (5) einzuspritzen.

2. Verfahren nach Anspruch 1, das nach dem Vorgang der lokalen Druckbeaufschlagung einen Druckminderungsvorgang enthält, der darin besteht, das beim Vorgang der Druckbeaufschlagung eingespritzte Fluid abzuführen.

3. Verfahren nach Anspruch 1 oder 2, **dadurch gekennzeichnet, dass** das beim Vorgang der Druckbeaufschlagung verwendete Fluid Druckluft ist.

4. Vorrichtung (1) zum Formen eines Behälters (2) ausgehend von einem Rohling (3), die enthält:
- eine Form (6), die mit einer einen Hohlraum (9) definierenden Wand (7) versehen ist;
- einen Einbuchtungseinsatz (13), der bezüglich der Wand (7) der Form (6) zwischen einer zurückgezogenen Stellung, in der der Einsatz (13) in die Wand (7) eingezogen ist, und einer ausgetretenen Stellung beweglich montiert ist, in der der Einsatz (13) sich bezüglich der Wand (7) zum Inneren des Hohlraums (9) vorstehend erstreckt, um auf dem Behälter (2) durch Zurückschieben eine zum Inneren des Behälters (2) vorstehende Vertiefung (5) zu formen, wobei der Einsatz (13) eine Stirnfläche (26) aufweist, die mit der Vertiefung (5) in Kontakt kommen kann;
**dadurch gekennzeichnet, dass** sie enthält:
- einen Einspritzkreislauf (27) eines Druckfluids, der zumindest zum Teil im Einsatz (13) geformt ist und an der Stirnfläche (26) mündet.

5. Vorrichtung (1) nach Anspruch 4, **dadurch gekennzeichnet, dass** der Einspritzkreislauf (27) eine Zufuhrleitung (28, 29) des Fluids enthält, die mit mindestens einem im Einsatz (13) geformten und an der Stirnfläche (26) mündenden Kanal (30) verbunden ist.

6. Vorrichtung nach Anspruch 5, **dadurch gekennzeichnet, dass** der Einspritzkreislauf (27) zwei Kanäle (30) in Form eines V enthält, die im Einsatz (13) geformt sind und an zwei gegenüberliegenden Flanken (32, 33) der Stirnfläche (26) des Einsatzes (13) münden.

7. Vorrichtung (1) nach einem der Ansprüche 4 bis 6, **dadurch gekennzeichnet, dass** sie einen Formträger (10) enthält, an dem die Form (6) befestigt ist, und dass ein Abfuhrkreislauf (41) aus der Aussparung (15) im Formträger (10) eingerichtet ist.

8. Vorrichtung (1) nach Anspruch 7, **dadurch gekennzeichnet, dass** der Abfuhrkreislauf eine im Formträger (10) \ eingerichtete Kompensationskammer (38) und eine Kanalisation (43) enthält, die im Formträger (10) eingerichtet ist und in der Kompensationskammer (38) mündet.

9. Vorrichtung (1) nach einem der Ansprüche 4 bis 8, **dadurch gekennzeichnet, dass** sie außerdem einen Heizkreislauf (20) des Einsatzes (13) enthält, der eine Zufuhrleitung (21, 23) eines Wärmeträgerfluids bis zum Einsatz (13) und eine Abfuhrleitung (22, 24) des Wärmeträgerfluids aus dem Einsatz (13) enthält.

10. Fertigungsmaschine für Behälter, die eine Vorrichtung nach einem der Ansprüche 4 bis 9 enthält.

## Claims

1. Method of forming, in a mould (**6**) provided with a wall (**7**) forming a cavity, a container (**2**) from a blank (**3**), which comprises:
- a boxing operation consisting in locally pushing the material of the blank (**3**) by means of an insert (**13**) mounted moveably with respect to the wall (**7**) of the mould (**6**) between a retracted position in which the insert (**13**) is retracted into the wall (**7**), and a deployed position in which the insert (**13**) protrudes with respect to the wall (**7**), in order to form on the container (**2**), by pushing, a hollow reserve (**5**) projecting towards the interior of the container (**2**);
**characterized in that** it comprises:
- a local pressurization operation consisting, after formation of the hollow reserve (**5**), in injecting a pressurized fluid between the insert (**13**) and the hollow reserve (**5**).

2. Method according to Claim 1, which comprises, upon completion of the local pressurization operation, a depressurization operation consisting in discharging the fluid injected during the pressurization operation.

3. Method according to Claim 1 or 2, **characterized in that** the fluid employed during the pressurization operation is pressurized air.

4. Device (**1**) for forming a container (**2**) from a blank (**3**), which comprises:
- a mould (**6**) provided with a wall (**7**) defining a cavity (**9**);
- a boxing insert (**13**) mounted moveably with respect to the wall (**7**) of the mould (**6**) between a retracted position in which the insert (**13**) is retracted into the wall (**7**), and a deployed position in which the insert (**13**) protrudes with respect to the wall (**7**), towards the interior of the cavity (**9**), in order to form on the container (**2**), by pushing, a hollow reserve (**5**) projecting towards the interior of the container (**2**), the said insert (**13**) having a front surface (**26**) capable of coming into contact with the hollow reserve (**5**);
**characterized in that** it comprises:
- a circuit (**27**) for injecting a pressurized fluid, formed at least partially in the insert (**13**) and opening onto the front surface (**26**).

5. Device (**1**) according to Claim 4, **characterized in that** the injection circuit (**27**) comprises a fluid feed line (**28, 29**) connected to at least one channel (**30**) formed in the insert (**13**) and opening onto the front surface (**26**).

6. Device according to Claim 5, **characterized in that** the injection circuit (**27**) comprises two V-shaped channels (**30**) formed in the insert (**13**) and opening onto two opposed flanks (**32, 33**) of the front surface (**26**) of the insert (**13**).

7. Device (**1**) according to one of Claims 4 to 6, **characterized in that** it comprises a mould holder (**10**) to which the mould (**6**) is fixed, and **in that** a circuit (**41**) for discharging the fluid from the recess (**15**) is formed in the mould holder (**10**).

8. Device (**1**) according to Claim 7, **characterized in that** the said discharge circuit comprises a compensation chamber (**38**) formed in the mould holder (**10**) and a duct (**43**) formed in the mould holder (**10**) and opening into the compensation chamber (**38**).

9. Device (**1**) according to one of Claims 4 to 8, **characterized in that** it additionally comprises a circuit (**20**) for heating the insert (**13**), which comprises a line (**21, 23**) for feeding a heat-transfer fluid to the insert (**13**), and a line (**22, 24**) for discharging the heat-transfer fluid from the insert (**13**).

10. Machine for manufacturing containers, comprising a device according to one of Claims 4 to 9.
